# EUROPÄISCHE PATENTSCHRIFT

(11) **EP 2 088 306 B1**
(45) Veröffentlichungstag und Bekanntmachung des Hinweises auf die Patenterteilung: **21.09.2011**
(21) Anmeldenummer: 09001686.6
(22) Anmeldetag: 06.02.2009
(51) Int. Cl.: F02M 21/02

(54) **Verfahren zur Reinigung von Flüssiggaseinspritzventilen**
Method for cleaning fluid gas injection valves
Procédé de nettoyage de soupapes d'injection de gaz liquide

(30) Priorität: 08.02.2008 DE 102008008125
(43) Veröffentlichungstag der Anmeldung: 12.08.2009
(73) Patentinhaber: TUNAP Industrie Chemie GmbH & Co. Produktions KG, 82515 Wolfratshausen (DE)
(72) Erfinder: Sprügel, Friedrich, 81825 München (DE); Köppel, Manfred, 83278 Traunstein-Axdorf (DE)
(74) Vertreter: Wagner, Bernhard Peter

(56) Entgegenhaltungen:
- EP-A- 2 014 902
- WO-A-2007/069287
- US-B1- 6 820 627
- US-B1- 7 231 930

## Beschreibung

Die vorliegende Erfindung betrifft ein Verfahren zur Reinigung von Flüssiggaseinspritzventilen, insbesondere von Flüssiggaseinspritzventilen, wie sie bei Verbrennungsmotoren verwendet werden.

Im Hinblick auf die Nutzung alternativer Kraftstoffe werden Kraftfahrzeuge verschiedener Hersteller immer häufiger für den Betrieb mit Flüssiggas, auch Autogas oder LPG (Liquid Petroleum Gas) genannt, ausgerüstet. Dabei wird meistens der ursprüngliche, für Benzinbetrieb ausgelegte Motor belassen und mit einer zusätzlichen LPG- oder Autogasanlage versehen.

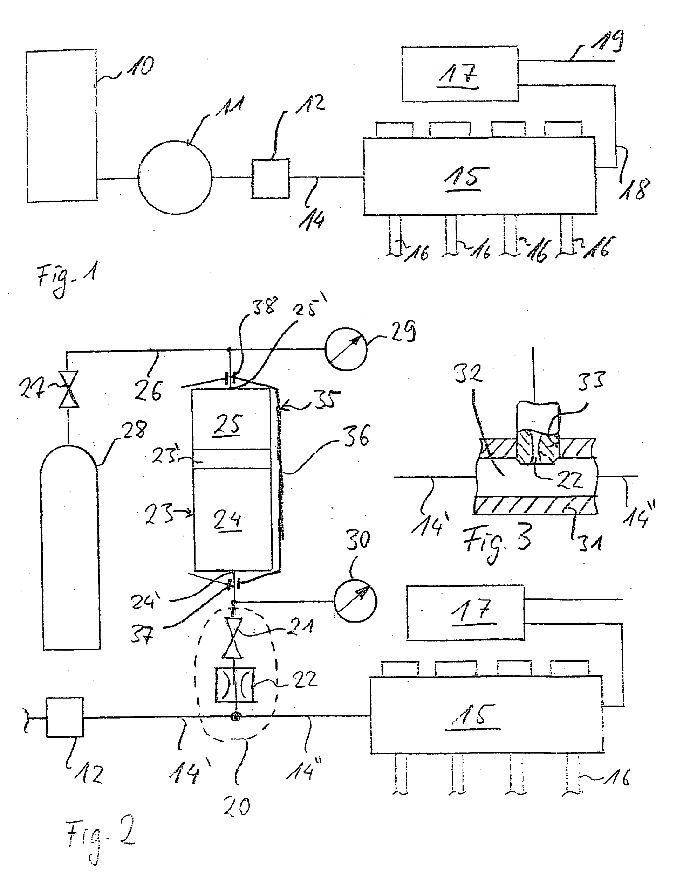

Wie in Figur 1 dargestellt, weist eine derartige LPG-Gasanlage einen Gastank 10, einen Verdampfer 11 sowie einen Druckminderer 12 auf, dessen Ausgang über eine Leitung 14 mit einer Einspritzventilanordnung 15 verbunden ist. Die Einspritzventilanordnung 15 kann ein einzelnes Einspritzventil zur zentralen Einspritzung von Flüssiggas in das Saugrohr eines Verbrennungsmotors (nicht dargestellt) oder eine Mehrzahl von Einspritzventilen umfassen, von denen jedes verdampftes Flüssiggas über zugeordnete Leitungen 16 den jeweiligen Ansaugbereichen des Verbrennungsmotors zuführt. Um den Verbrennungsmotor je nach Fahrzustand entweder mit Benzin oder mit Flüssiggas zu versorgen, um also zwischen Benzin oder Gasbetrieb umzuschalten, ist ein entsprechendes Steuergerät 17 vorgesehen, das über eine Leitung 18 die Einspritzventilanordnung 15 und über eine Leitung 19 in nicht näher dargestellter Weise die Benzineinspritzung veranlasst.

Derartige Autogasanlagen arbeiten automatisch und weitgehend störungsfrei, solange das verwendete Flüssiggas der DIN-Norm entspricht und weitestgehend frei von Verunreinigungen und Verharzungen durch olefinische Komponenten ist.

Ist das verwendete Flüssiggas jedoch durch olefinisches Gas, z.B. durch parafinische Komponenten C3 bis C5 mit Doppelbindungen im Molekül verunreinigt, so wird sich hierdurch im Laufe der Zeit an den Wänden der Leitungen und der Einspritzventile durch Einwirkung von Druck und Temperatur ein öliger bis klebriger Film bilden, der bei den empfindlichen Einspritzventilen zu Störungen führt. Störungen bei der Einspritzung von Flüssiggas führen zu Störungen der Laufeigenschaften des Verbrennungsmotors sowie zur Beeinträchtigung seiner Leistungscharakteristik. Außerdem können Schäden im Katalysator der Abgasanlage auftreten, da das im Verbrennungsmotor zugeführte Luftgasgemisch nicht mehr die für einen einwandfreien Betrieb erforderliche Zusammensetzung aufweist.

Um Störungen des Motorbetriebs zu vermeiden ist es daher erforderlich, die Autogasanlage und insbesondere die Flüssiggaseinspritzventile zu reinigen.

Die US 7,231,930 B1 beschreibt eine Einspritzventilreinigungsvorrichtung. Bei dieser Vorrichtung ist ein Propantank über eine Zugangsleitung mit einer Propanverbrennungsmaschine verbunden, wobei in der Zugangsleitung ein Y-förmiges Rohrverbindungsstück mit einem Einlass und einem rohrförmigen Abschnitt vorgesehen ist. Über den Einlass, welcher ein Rückschlagventil aufweist, kann durch eine Leitung eine Reinigungsflüssigkeit, welche in einem Reinigungsmittelbehälter unter Druck gelagert wird, in die Zugangsleitung eingeleitet werden. Der Reinigungsmittelbehälter ist hierbei über ein Ventil mit der Reinigungsmittelleitung verbunden.

Die US 6,820,627 B1 beschreibt eine Direkteinspritzerreinigungsvorrichtung. Eine Kraftstoffeinspritzerreinigungsvorrichtung zur Verwendung in einem Automobil mit einem Motor, welcher ein Kraftstoffeinspritzsystem, eine Kraftstoffzufuhr, und eine Kraftstoffleitung aufweist, weist ein Hauptgehäuse und einen Behälter auf. Das Hauptgehäuse weist einen Kraftstoffeinlass in Richtung der Kraftstoffzufuhr und einen Kraftstoffauslass in Richtung des Motors auf. Das Hauptgehäuse weist weiter einen Reinigungseinlass in Verbindung mit dem Behälter auf. Während des Betriebs des Automobils fließt Kraftstoff von der Kraftstoffzufuhr zu dem Kraftstoffeinlass durch das Innere des Hauptgehäuses zu dem Kraftstoffauslass in den Motor. Ein Kraftstoffeinspritzreiniger wird von dem Behälter in den Kraftstofffluss durch den Reinigungseinlass zugeführt.

Die WO 2007/069287 A2 beschreibt einen Gas- und Flüssigkeitsreinigungsmischer zum Reinigen von Gasinjektoren bei Verbrennungsmaschinen ohne Demontierung. Der Gas- und Flüssigkeitsreinigungsmischer ist an einem Kraftstoffzuführsystem der Verbrennungsmaschine befestigt, welche mit LPG oder Methan versorgt wird. Der Mischer wird verwendet, damit eine eingestellte Mischung aus Kraftstoffgas und Reinigungsmittel die Gasinjektoren reinigen kann, ohne dass der Motor demontiert werden muss, wobei der Motor in Betrieb ist.

Die EP 2 014 902 A2 beschreibt ein Verfahren und eine Vorrichtung zum Reinigen von Verbrennungsmaschinen. Bei dem Verfahren zum Reinigen von Verbrennungsmaschinen, welche mit Flüssiggas betrieben werden, wird eine vorbestimmte Menge von Reinigungsflüssigkeit mit dem Kraftstoff innerhalb einer Leitung stromabwärts eines Druckminderers und stromaufwärts von zumindest einem Einspritzer gemischt, während das Flüssiggas durch die Leitung fließt, um dem Motor während des Betriebs zugeführt zu werden.

Dementsprechend liegt der Erfindung die Aufgabe zugrunde, ein Verfahren zur Reinigung von Flüssiggaseinspritzventilen bereitzustellen, das bzw. die eine zuverlässige und gründliche Reinigung des Systems ohne großen Aufwand ermöglicht.

Diese Aufgabe wird durch das Verfahren nach Anspruch 1 gelöst. Vorteilhafte Ausgestaltungen und Weiterbildungen der Erfindung sind in den jeweiligen Unteransprüchen beschrieben.

Erfindungsgemäß wird also zum Reinigen von Flüssiggaseinspritzventilen eines Verbrennungsmotors, zunächst ein Aerosol aus einem flüssigen Reinigungsmittel und verdampftem, also gasförmigem Flüssiggas gebildet, das dann anstelle des im Normalbetrieb durch die Flüssiggaseinspritzventile strömendem gasförmigen Flüssiggas durch diese geleitet wird. Hierbei schlägt sich die Reinigungsflüssigkeit an den Wänden der Gasleitungen, der Einspritzventile sowie an den Ventilsitzen und Schließkörpern der Ventile nieder und löst nach und nach Verunreinigungen auf, die dann von dem nachströmenden Gasstrom, also nachströmendem Reinigungsaerosol mitgerissen und bei der Verbrennung des Flüssiggases im Verbrennungsmotor ebenfalls mit verbrannt werden.

Zweckmäßigerweise ist vorgesehen, dass die Reinigungsflüssigkeit zur Erzeugung des Aerosols in den zu den Flüssiggaseinspritzventilen führenden gasförmigen Flüssiggasstrom eingeleitet und dabei zerstäubt wird. Hierdurch wird eine besonders einfache Erzeugung des Aerosols aus Reinigungsmittel und verdampftem Flüssiggas ermöglicht, was die Handhabung des erfindungsgemäßen Reinigungsverfahrens wesentlich vereinfacht.

Zweckmäßigerweise ist dabei vorgesehen, dass Reinigungsflüssigkeit durch eine Zumessdüse hindurch in das gasförmige Flüssiggas hinein zerstäubt wird, wobei der Druck in der Reinigungsflüssigkeit vor der Zumessdüse 0,5 bis 3,0 bar, insbesondere 0,8 bis 1,2 bar über dem Gasdruck des gasförmigen Flüssiggases liegt.

Durch die feinfühlige Dosierung beim Zerstäuben des Reinigungsmittels in den Gasstrom wird ein Aerosol erhalten, das nicht zu nass ist und daher vollständig verbrannt werden kann, so dass Beschädigungen des Katalysators im Abgassystem vermieden werden können.

Bei einer besonders bevorzugten Ausführungsform der Erfindung ist vorgesehen, dass das Aerosol für eine erste vorbestimmte Zeit bei laufendem Verbrennungsmotor durch die Flüssiggaseinspritzventile geleitet wird, die Aerosolzufuhr für eine zweite vorbestimmte Zeit unterbrochen und der Verbrennungsmotor gestoppt wird, und nach Ablauf der zweiten vorbestimmten Zeit das Aerosol erneut bei laufendem Verbrennungsmotor durch die Flüssiggaseinspritzventile geleitet wird, bis eine vorgegebenen Menge von Reinigungsflüssigkeit aufgebraucht ist.

Erfindungsgemäß wird also das Reinigungsverfahren in drei Phasen unterteilt. In der ersten Phase wird erreicht, dass sich ein hinreichender Reinigungsmittelniederschlag an den Wänden der Leitungen und den in den Leitungen befindlichen Hindernissen, wie Ventilsitz, Ventilkörper und dergleichen ergibt. In einer zweiten Phase wird dann dem Reinigungsmittel die nötige Zeit zur Verfügung gestellt, die bestehenden Verschmutzungen und Verharzungen in den Leitungen und den Ventilen lösen zu können. Sobald dies geschehen ist, wird dann in einer dritten Phase, einer so genannten Spül- und Nachreinigungsphase das an den Wänden abgeschiedene Reinigungsmittel mit den gelösten Verschmutzungen vom Gasstrom mitgerissen und abgeführt, wobei während dieser Phase vom Gasstrom mitgeführtes Reinigungsmittel sich erneut an den Leitungswänden und Hindernissen niederschlagen kann, um anschließend wiederum von dem Gasstrom mitgerissen zu werden, so dass in der ersten und zweiten Phase noch nicht gelöste Verharzungen und Verunreinigungen auch noch beseitigt werden können.

Durch eine geeignete Abstimmung von zugeführter Reinigungsmittelmenge und Einwirkzeit lässt sich erreichen, dass die Verschmutzungen so vollständig gelöst werden, dass sie zusammen mit dem Flüssiggas verbrennen und damit keine Schädigungen des Katalysator bewirken.

Es hat sich gezeigt, dass es zweckmäßig ist, die zweite vorbestimmte Zeit, also die Zeit der Einwirkung der Reinigungsmittel auf die Verunreinigungen und Verharzungen länger als die erste vorbestimmte Zeit zu wählen. Zweckmäßigerweise ist die Einwirkzeit dabei 2 bis 4 mal, insbesondere 3 mal so lang, wie die Zeit für die Zuführphase von Reinigungsmittel.

Eine gute Bedeckung der Leitungswände und Hindernisse mit Reinigungsmittel ergibt sich, wenn die erste vorbestimmte Zeit etwa 3 bis 10 min, insbesondere 4 bis 8 min, vorzugsweise 5 bis 6 min beträgt.

Um durch die Leitungen und die Einspritzventile einen genügend großen Volumenstrom hindurchleiten zu können, ist es vorteilhaft, wenn der Verbrennungsmotor ohne Last bei einer Drehzahl arbeitet, die über der Leerlaufdrehzahl liegt, wobei die Drehzahl des Verbrennungsmotors im Bereich von 1800 U/min bis 3000 U/min, vorzugsweise im Bereich von 2000 U/min bis 2500 U/min liegt.

Gemäß einer besonders bevorzugten Ausgestaltung der Erfindung ist vorgesehen, dass der Verbrennungsmotor während der ersten vorbestimmten Zeit ohne Last bei einer Drehzahl im Bereich von 1800 U/min bis 2200 U/min, insbesondere von 2000 U/min arbeitet, während er während der zweiten Betriebsphase mit höherer Drehzahl im Bereich von 2000 U/min bis 2500 U/min läuft.

Durch die höhere Drehzahl des Verbrennungsmotors während der zweiten Betriebsphase, also während der Spül- und Nachreinigungsphase wird erreicht, dass eine große Menge von Aerosol durch die Leitungen und Einspritzventile geleitet wird, so dass das zuerst eingebrachte Reinigungsmittel, in dem Verharzungen und Verunreinigungen gelöst sind, besonders zuverlässig aus den Leitungen und den Einspritzventilen abgeführt werden kann. Das erfindungsgemäße Verfahren lässt sich auf besonders vorteilhafte Weise mit einer Vorrichtung zur Reinigung von Flüssiggaseinspritzventilen durchführen, die ein Verbindungsstück aufweist, das einen mit einer ersten und einer zweiten Leitung verbindbaren Gasdurchlass für einen gasförmigen Flüssiggasstrom und eine quer in den Gasdurchlass mündende Zumessdüse aufweist, an deren Einlassseite ein Reinigungsmittelbehälter anschließbar ist, wobei die Zumessdüse einen Durchmesser von 0,05 bis 0,5 mm, vorzugsweise 0,2 mm aufweist.

Da die Vorrichtung ein einfaches Verbindungsstück aufweist, lässt sich die Reinigungsvorrichtung ohne große Änderungen auf äußerst einfache Weise an eine in einem Kraftfahrzeug befindliche Autogasanlage anschließen, so dass das durch die Einspritzventile zu leitende Reinigungsaerosol einfach in dem Verbindungsstück mit Hilfe der Zumessdüse aus dem Reinigungsmittel und dem zu der Einspritzventilanordnung fließenden Flüssiggas, das hier bereits gasförmig ist, erzeugt werden kann.

Eine besonders wirkungsvolle Aerosolbildung wird erreicht, wenn die Zumessdüse nach dem Venturi-Prinzip aufgebaut ist und mittig in eine kubische Düsenkammer im Gasdurchlass hineinragt.

Zweckmäßiger Weise ist vorgesehen, dass auf der Einlassseite der Zumessdüse ein Absperrhahn oder -ventil angeordnet ist, dem vorzugsweise ein Rückschlagventil vor oder nachgeschaltet ist.

Die Handhabung der Vorrichtung wird weiter vereinfacht, wenn ferner ein Adapter zur Verbindung eines Reinigungsmittelbehälters mit der Einlassseite der Zumessdüse vorgesehen ist, der einen Aufnahmekorb und Anschlussmittel zur Verbindung eines Reinigungsmittelauslasses des Reinigungsmittelbehälters mit dem Absperrhahn aufweist.

Falls anstelle eines Reinigungsmittelbehälters mit integrierter Druckquelle, also anstelle einer Reinigungsmitteldose, deren Inhalt unter Eigendruck steht, ein Reinigungsmittelbehälter mit zwei Kammern eingesetzt wird, von denen die eine als Arbeitskammer für den Transport drucklos ist, während die andere als Reinigungsmittelkammer das Reinigungsmittel enthält, ist es zweckmäßig, wenn der Adapter Anschlussmittel zur Verbindung einer Druckquelle mit einem Druckeinlass der Arbeitskammer des Zweikammer-Reinigungsmittelbehälters aufweist.

Um die Handhabung der Vorrichtung weiter zu vereinfachen, ist es vorteilhaft, dass an den Anschlussmitteln zur Verbindung eines Reinigungsmittelauslasses und/oder an den Anschlussmitteln zur Verbindung einer Druckquelle mit einem Druckeinlass ein Manometer vorgesehen ist.

Die Erfindung wird im Folgenden beispielsweise anhand der Zeichnung näher erläutert. Es zeigen:
Figur 1 eine schematische vereinfachte Darstellung einer Autogasanlage, wie sie insbesondere zum Einbau in Kraftfahrzeuge mit herkömmlichem Ottomotor vorgesehen ist;
Figur 2 eine vereinfachte schematische Darstellung einer Vorrichtung zur Durchführung eines erfindungsgemäßen Verfahrens zur Reinigung von Flüssiggaseinspritzventilen, die an eine Anlage gemäß Figur 1 angeschlossen ist; und
Figur 3 eine schematisch vereinfachte Schnittdarstellung eines bevorzugten Verbindungsstücks der Reinigungsvorrichtung, mit dem diese an die zur Einspritzventilanordnung führende Gasleitung anschließbar ist.

In den verschiedenen Figuren der Zeichnung sind einander entsprechende Bauteil mit gleichen Bezugszeichen versehen.

Wie in Figur 2 dargestellt ist, wird zum Anschluss der Reinigungsvorrichtung an das System nach Figur 1 zwischen den Druckminderer 12, oder falls ferner ein Gasfilter in der Leitung vorgesehen ist, zwischen dieses und die Einspritzventilanordnung 15 ein T-förmiges Verbindungsstück 20 eingesetzt, dessen miteinander fluchtende Anschlüsse über Leitungen 14', 14" mit dem Ausgang des Druckminderers 12, bzw. mit dem Eingang der Einspritzventilanordnung 15 verbunden werden. Der dritte Anschluss, der einen Absperrhahn 21 und eine Zumessdüse 22 aufweist, ist mit einem Auslass 24' eines Reinigungsmittelbehälters 23 verbunden. Der Reinigungsmittelbehälter 23 ist als Zweikammerbehälter dargestellt, der eine Reinigungsmittelkammer 24 und eine Arbeitskammer 25 aufweist, die über eine Druckleitung 26 und ein Absperrventil 27 mit einer Druckquelle 28 verbunden ist. An den Druckeingang 25' der Arbeitskammer 25 ist ein Manometer 29 angeschlossen, um über das Ventil 27 den Druck in der Arbeitskammer 25 einstellen zu können. Am Ausgang 24' der Reinigungsmittelkammer 24 ist ein weiteres Manometer 30 vorgesehen, um den Zuführdruck für Reinigungsmittel zur Zumessdüse 22 präzise einstellen zu können. Um zu verhindern, dass Flüssiggas aus den Leitungen 14', 14" über die Zumessdüse 22 in Richtung Absperrhahn 21 und/oder Reinigungsmittelbehälter 23 fließt, ist in nicht näher dargestellter Weise zwischen der Zumessdüse 22 und dem Absperrhahn 21 ein Gasrückschlagventil angeordnet. Das Gasrückschlagventil kann aber auch zwischen dem Anschluss des Manometers 30 und dem Absperrventil 21 vorgesehen sein.

Das Verbindungsstück 20 weist einen Metallkörper 31 auf, in dem ein Gasdurchlass 32 mit einem Querschnitt von etwa 10 bis 12 mm Durchmesser vorgesehen ist. In dem Metallkörper 31 ist eine Düseneinsetzöffnung 33 vorgesehen, in die ein die Zumessdüse 22 aufweisender Düsenkörper 34 einsetzbar, insbesondere einschraubbar ist, so dass die Zumessdüse 22 mittig in den Gasdurchlass 32, oder in eine kubische Düsenkammer hineinragt, durch die der Gasdurchlass verläuft.

Die Zumessdüse 22, die nach dem Venturi-Prinzip aufgebaut ist, besitzt einen kleinsten Düsendurchmesser im Bereich von 0,05 bis 0,5 mm, insbesondere von 0,2 mm.

Der Reinigungsmittelbehälter 23, der in Figur 2 als Zweikammerbehälter 23 mit zwischen der Reinigungsmittelkammer 24 und der Arbeitskammer 25 vorgesehener Trennwand 23' dargestellt ist, kann alternativ dazu auch als unter Eigendruck stehender Reinigungsmittelbehälter ausgebildet sein.

Vorzugsweise weist die Reinigungsvorrichtung einen Adapter 35 mit einem Aufnahmekorb 36 für den Reinigungsmittelbehälter 23 und Anschlussmitteln 37 auf, mit deren Hilfe der Reinigungsmittelbehälter 23 an das Verbindungsstück 20 mit der Zumessdüse 22 angeschlossen werden kann. Um den Reinigungsmittelbehälter 23 gegebenenfalls auch an die Druckquelle 28 anschließen zu können sind am Adapter 35 weitere Anschlussmittel 38 angebracht.

Je nach Art der zu reinigenden Einspritzventilanordnung 15 können Reinigungsmittelbehälter 23 mit unterschiedlichem Fassungsvermögen verwendet werden. Die Füllvolumen der Reinigungsmittelbehälter 23 liegen dabei im Bereich zwischen 100 ml und 750 ml. Typischer Weise werden Reinigungsmittelbehälter eingesetzt, die ein Fassungsvermögen von 500 ml aufweisen.

Die Reinigungsflüssigkeit, die zusammen mit der Reinigungsvorrichtung zum Reinigen von Flüssiggaseinspritzventilen eingesetzt wird, besteht zweckmäßigerweise aus einem aliphatischen Kohlenwasserstoff mit Kettenlänge C5 bis C8, dem Reinigungsverstärker, wie beispielsweise C2 bis C4 Alkohole und Ester C2 bis C4. Ferner können Äther und Ketone beigemischt sein. Niedermolekulare Reinigungstenside mit funktionellen Gruppen sowie stickstoffhaltige Lösungsmittel wie DMF, Morpholin, Aminoäthanol usw. können ebenfalls beigemischt werden. Außerdem ist es möglich, ein Additiv gemäß dem deutschen Gebrauchsmuster 20 2007 001 706 in der Höhe von 0,05 Gew.-% bis 1 Gew.-% zuzugeben.

Beispiele für Reinigungsmittelformulierungen, wie sie für die vorliegende Erfindung eingesetzt werden können, sind in den folgenden Tabellen angegeben:

**Tabelle 1**

| **Gew.-%** | **Wirkstoff** | **Kettenlänge** |
|---|---|---|
| 50 - 75 % | Kohlenwasserstoff | C5 - C6 |
| 50 - 25 % | Alkohol | C2 - C4 |
| 0,1% | Additiv gemäß Gebrauchsmuster Nr. 20 2007 001 706 | |

**Tabelle 2**

| **Gew.-%** | **Wirkstoff** | **Kettenlänge** |
|---|---|---|
| 50 - 75 % | Kohlenwasserstoff | C5 - C6 |
| 45 - 25 % | Alkohol | C2 - C4 |
| 5,0% | Ester | C1 - C2 (Methylacetat, Äthylacetat) |

**Tabelle 3**

| **Gew.-%** | **Wirkstoff** | **Kettenlänge** |
|---|---|---|
| 75,0% | Kohlenwasserstoff | C5 - C6 |
| 20,0% | Alkohol | C2 - C4 |
| 5,0% | Äther (MTBE, ETBE) Diäthyläther | |
| 0,1% | Tensid (Surfinol) gemäß Gebrauchsmuster Nr. 20 2006 008 745 | |

| | | |
|---|---|---|
| MTBE: = Methyltertiärbutyläther ETBE: = Ethyltertiärbutyläther | | |

**Tabelle 4**

| **Gew.-%** | **Wirkstoff** | **Kettenlänge** |
|---|---|---|
| 60 - 75 % | Kohlenwasserstoff | C5 - C6 |
| 10 - 20 % | Alkohol | C2 - C4 |
| 10 - 15 % | Äther (MTBE oder ETBE) | |
| 0,5 - 6,0 % | N-Lösungsmittel (DMF, Morpholin etc.) | |

| | | |
|---|---|---|
| DMF: = Dimethylformamid N: = stickstoffhaltiges | | |

**Tabelle 5**

| **Gew.-%** | **Wirkstoff** | **Kettenlänge** |
|---|---|---|
| bis 75 % | Kohlenwasserstoff | C6 |
| bis 15 % | Alkohol | C3 |
| bis 5 % | Ketone (Aceton) | C2 - C4 |
| bis 5 % | Äther | Diethylether oder MTBE oder ETBE |
| 0,2 - 0,5 % | Tenside (flüchtige) gemäß Gebrauchsmuster Nr. 20 2006 008 745.1 | z. B.: 3.5. Dimethyl-1-hexin-3-ol Octamethylcyclotetrasiloxan, Octaethylcyclotetrasiloxan |

Andere Formulierungen können ebenfalls eingesetzt werden.

Die Reinigung einer Einspritzventilanordnung 15 wird mit Hilfe der Vorrichtung wie folgt durchgeführt.

Nachdem das Verbindungsstück 22 mit Hilfe der Leitungen 14' und 14" zwischen den Druckminderer 12 und die Einspritzventilanordnung 15 eingesetzt wurde, und nachdem der Adapter 35 zur Aufnahme des Reinigungsmittelbehälters 23 an das Verbindungsstück 20 und gegebenenfalls an die Druckquelle 28 angeschlossen wurde, wird ein mit einem Reinigungsmittel gefüllter Reinigungsmittelbehälter 23 in den Adapter 35 eingesetzt, so dass der Auslass 24' der Reinigungsmittelkammer 24 über die Anschlussmittel 37, das Absperrventil 21, das nicht gezeigte Rückschlagventil und die Zumessdüse 22 mit dem Gasdurchlass 32 des Verbindungsstücks 22 verbunden werden kann. Außerdem wird bei Einsatz eines Zweikammerbehälters der Einlass 25' der üblicherweise drucklosen Arbeitskammer 25 über die Anschlussmittel 38, die Leitung 26 und das Absperrventil 27 mit der Druckquelle 28 verbunden. Der Gasdruck in der Arbeitskammer wird dabei mit Hilfe des Ventils 27 so eingestellt, dass er unabhängig vom wachsenden Volumen der Arbeitskammer 25 konstant 0,5 bis 3 bar über dem Gasdruck im Gasdurchlass 32 liegt. Vorzugsweise wird der Druck dabei zwischen 0,8 bis 1,2 bar über dem Gasdruck eingestellt.

Nach diesen vorbereitenden Arbeiten wird der Fahrzeugmotor zunächst im Benzinbetrieb laufen gelassen, bis er eine Betriebstemperatur von etwa 80°C aufweist. Der Motor wird dann auf Gasbetrieb umgeschaltet und im Leerlauf weiterlaufen gelassen.

Sobald der Motor im Gasbetrieb ohne Last konstant läuft, wird das Absperrventil 21 geöffnet, so dass unter Druck stehendes Reinigungsmittel aus der Reinigungsmittelkammer 24 über das Rückschlagventil, das nun geöffnete Absperrventil 21 und die Zumessdüse 22 so in den Gasdurchlass 32 eingeführt wird, dass die aus der nach dem Venturi-Prinzip aufgebauten Zumessdüse austretende Reinigungsflüssigkeit zerstäubt wird und zusammen mit dem verdampften Flüssiggas einen Sprühnebel also ein Aerosol bildet, der bzw. das von dem Gasstrom im Gasdurchlass 32 mitgenommen wird. Das zerstäubte Reinigungsmittel schlägt sich teilweise an den Wänden der Leitungen und der Einspritzventile, sowie an den Ventilsitzen und Schließkörpern nieder und löst dort vorliegende Verunreinigungen und Verharzungen auf, die durch olefinische Komponenten des Flüssiggases verursacht wurden. Um zu erreichen, dass das Reinigungsmittel sich in genügender Menge auf den zu reinigenden Wandabschnitten niederschlagen kann, wird der Motor mit erhöhter Drehzahl im Leerlauf für eine vorbestimmte Zeit betrieben. Es hat sich als zweckmäßig erwiesen, den Motorbetrieb im Leerlauf zu Reinigungszwecken bei ca. 2000 U/min für eine erste vorbestimmte Zeit von etwa 5 min durchzuführen.

Nachdem auf diese Weise sichergestellt ist, dass die zu reinigenden Bereiche hinlänglich mit Reinigungsmittel bedeck sind, wird der Motor abgeschaltet, um das Reinigungsmittel für eine zweite vorbestimmte Zeit einwirken zu lassen. Die vorbestimmte Einwirkzeit liegt dabei zweckmäßigerweise im Bereich von 5 bis 25 min, vorzugsweise von 10 bis 20 min, insbesondere bei 15 min.

Nach der Einwirkzeit wird der Motor erneut gestartet und auf Gasbetrieb umgeschaltet, so dass anschließend wiederum durch Öffnen des Absperrventils 21 die Reinigungsmittelzufuhr fortgesetzt werden kann. Hierbei läuft der Motor zweckmäßigerweise wiederum ohne Last mit Drehzahlen zwischen 2000 U/min und 2500 U/min. Dieser Betrieb wird so lange durchgeführt, bis das gesamte Reinigungsmittel aus der Reinigungsmittelkammer 24 entleert ist.

Während dieses Spülbetriebs werden die gelösten Verunreinigungen von dem Reinigungsmittelaerosol in den Gasstrom mitgerissen, so dass eine wirksame Reinigung aller Wandbereiche stromabwärts der Reinigungsmittelzufuhrstelle erzielt wird.

Nach Abschluss der Reinigung wird die Vorrichtung abgebaut und die Verbindung zwischen dem Druckminderer 12 und der Einspritzventilanordnung durch die Originalleitung 14 wiederhergestellt.

Die vorliegende Erfindung ermöglicht somit eine zuverlässige Reinigung von Autogasanlagen, insbesondere von Einspritzventilanordnungen von Autogasanlagen, die ohne großen Zeitaufwand preisgünstig mit einfachen Mitteln durchgeführt werden kann, so dass die Lebensdauer der Gasanlage, insbesondere die Lebensdauer der Einspritzventilanordnung wesentlich erhöht werden kann.

## Patentansprüche

1. Verfahren zur Reinigung von Flüssiggaseinspritzventilen eines Verbrennungsmotors, wobei
- ein Aerosol aus einer Reinigungsflüssigkeit und gasförmigem Flüssiggas erzeugt wird, und
- das Aerosol bei laufendem Verbrennungsmotor anstelle von gasförmigem Flüssiggas durch die Flüssiggaseinspritzventile geleitet wird, wobei die Reinigungsflüssigkeit zur Erzeugung des Aerosols in den zu den Flüssiggaseinspritzventilen führenden gasförmigen Flüssiggasstrom eingeleitet und dabei zerstäubt wird, **dadurch gekennzeichnet, dass**
- das Aerosol für eine erste vorbestimmte Zeit bei laufendem Verbrennungsmotor durch die Flüssiggaseinspritzventile geleitet wird,
- die Aerosolzufuhr für eine zweite vorbestimmte Zeit unterbrochen und der Verbrennungsmotor gestoppt wird, und
- nach Ablauf der zweiten vorbestimmten Zeit das Aerosol erneut bei laufendem Verbrennungsmotor durch die Flüssiggaseinspritzventile geleitet wird, bis eine vorgegebenen Menge von Reinigungsflüssigkeit aufgebraucht ist.

2. Verfahren nach Anspruch 1, **dadurch gekennzeichnet, dass** Reinigungsflüssigkeit durch eine Zumessdüse (22) hindurch in das gasförmige Flüssiggas hinein zerstäubt wird, wobei der Druck in der Reinigungsflüssigkeit vor der Zumessdüse (22) 0,5 bis 3,0 bar, insbesondere 0,8 bis 1,2 bar über dem Gasdruck des gasförmigen Flüssiggases liegt.

3. Verfahren nach Anspruch 1, **dadurch gekennzeichnet, dass** die zweite vorbestimmte Zeit länger als die erste vorbestimmte Zeit, vorzugsweise 2 bis 4 mal so lang, insbesondere 3 mal so lang ist.

4. Verfahren nach einem der vorstehenden Ansprüche, **dadurch gekennzeichnet, dass** die erste vorbestimmte Zeit etwa 3 bis 10 min, insbesondere 4 bis 8 min, vorzugsweise 5 bis 6 min beträgt.

5. Verfahren nach einem der vorstehenden Ansprüche, **dadurch gekennzeichnet, dass** der Verbrennungsmotor ohne Last bei einer Drehzahl arbeitet, die über der Leerlaufdrehzahl liegt, wobei die Drehzahl insbesondere im Bereich von 1800 U/min bis 3000 U/min, vorzugsweise im Bereich von 2000 U/min bis 2500 U/min liegt.

6. Verfahren nach einem der vorstehenden Ansprüche, **dadurch gekennzeichnet, dass** der Verbrennungsmotor während der ersten vorbestimmten Zeit ohne Last bei einer Drehzahl im Bereich von 1800 U/min bis 2200 U/min, insbesondere von 2000 U/min arbeitet, während er während der zweiten Betriebsphase mit höherer Drehzahl im Bereich von 2000 U/min bis 2500 U/min läuft.

## Claims

1. A method for cleaning liquid gas injection valves of an internal combustion engine, wherein
- an aerosol is produced from a cleaning fluid and gaseous liquefied gas and
- the aerosol is passed through the liquid gas injection valves instead of gaseous liquefied gas when the internal combustion engine is running, wherein the cleaning fluid is introduced into the gaseous liquefied gas stream leading to the liquid gas injection valves to produce the aerosol and is thereby dispersed, **characterised in that**
- the aerosol is passed through the liquid gas injection valves for a first predetermined time when the internal combustion engine is running,
- the aerosol supply is interrupted for a second predetermined time and the internal combustion engine is stopped, and
- after the second predetermined time has elapsed, the aerosol is again passed through the liquid gas injection valves when the internal combustion engine is running until a predetermined amount of cleaning fluid is consumed.

2. The method according to claim 1, **characterised in that** the cleaning fluid is dispersed through a metering nozzle (22) into the gaseous liquefied gas, wherein the pressure in the cleaning fluid before the metering nozzle (22) lies 0.5 to 3.0 bar, in particular 0.8 to 1.2 bar above the gas pressure of the gaseous liquefied gas.

3. The method according to claim 1, **characterised in that** the second predetermined time is longer than the first predetermined time, preferably between twice and four times as long, in particular three times as long.

4. The method according to any one of the preceding claims, **characterised in that** the first predetermined time is about 3 to 10 min, in particular 4 to 8 min, preferably 5 to 6 min.

5. The method according to any one of the preceding claims, **characterised in that** the internal combustion engine operates without load at a rotational speed which lies above the idling speed, wherein the rotational speed lies in the range of 1800 rpm to 3000 rpm, preferably in the range of 2000 rpm to 2500 rpm.

6. The method according to any one of the preceding claims, **characterised in that** the internal combustion engine operates during the first predetermined time without load at a rotational speed in the range of 1800 rpm to 2200 rpm, in particular 2000 rpm whereas it runs during the second operating phase at a higher rotational speed in the range of 2000 rpm to 2500 rpm.

## Revendications

1. Procédé pour le nettoyage de soupapes d'injection de gaz liquide dans un moteur à combustion interne, dans lequel
- on engendre un aérosol à partir d'un liquide de nettoyage et d'un gaz liquide sous forme gazeuse, et
- alors que le moteur à combustion interne est en fonctionnement, on amène l'aérosol à travers les soupapes d'injection de gaz liquide à la place du gaz liquide sous forme gazeuse, et pour engendrer l'aérosol le liquide nettoyage est introduit dans le flux de gaz liquide sous forme gazeuse qui mène aux soupapes d'injection de gaz liquide et est ici pulvérisé,
**caractérisé en ce que**
- l'aérosol est amené pendant un premier temps prédéterminé alors que le moteur à combustion interne est en fonctionnement à travers les soupapes d'injection de gaz liquide,
- l'amenée d'aérosol est interrompue pendant un second temps prédéterminé et le moteur à combustion interne est arrêté, et
- après écoulement du second temps prédéterminé, l'aérosol est à nouveau amené à travers les soupapes d'injection de gaz liquide, alors que le moteur à combustion interne est en fonctionnement, jusqu'à ce que l'on ait consommé une quantité prédéterminée de liquide de nettoyage.

2. Procédé selon la revendication 1, **caractérisé en ce que** le liquide nettoyage est pulvérisé en traversant une buse de dosage (22) au sein du gaz liquide sous forme gazeuse, la pression dans le liquide de nettoyage avant la buse de dosage (22) étant de 0,5 à 3,0 bar, en particulier 0,8 à 1,2 bars au-dessus de la pression du gaz liquide sous forme gazeuse.

3. Procédé selon la revendication 1, **caractérisé en ce que** le second temps prédéterminé est plus long que le premier temps prédéterminé, de préférence 2 à 4 fois plus long, en particulier 3 fois plus long.

4. Procédé selon l'une des revendications précédentes, **caractérisé en ce que** le premier temps prédéterminé est d'environ 3 à 10 minutes, en particulier 4 à 8 minutes, de préférence 5 à 6 minutes.

5. Procédé selon l'une des revendications précédentes, **caractérisé en ce que** le moteur à combustion interne fonctionne sans charge à une vitesse de rotation qui est supérieure à la vitesse de rotation à vide, la vitesse de rotation étant en particulier dans la plage de 1800 tr/m à 3000 tr/m, de préférence dans la plage de 2000 tr/m à 2500 tr/m.

6. Procédé selon l'une des revendications précédentes, **caractérisé en ce que** le moteur à combustion interne fonctionne pendant le premier temps prédéterminé sans charge à une vitesse de rotation dans la plage de 1800 tr/m à 2200 tr/m, en particulier de 2000 tr/m, alors qu'il fonctionne pendant la seconde phase de fonctionnement à une vitesse de rotation plus élevée dans la plage de 2000 tr/m à 2500 tr/m.
